# EUROPEAN PATENT APPLICATION

(11) **EP 4 318 763 A1**
(43) Date of publication of application: **07.02.2024**
(21) Application number: 22778625.8
(22) Date of filing: 18.03.2022
(51) Int. Cl.: H01M 50/249, H01M 50/262, H01M 50/296, H01M 50/271, H01M 50/59

(54) **PROTECTIVE ASSEMBLY AND BATTERY MODULE**

(30) Priority: 01.04.2021 CN 202120672700 U
(71) Applicant: Beijing Chehejia Automobile Technology Co., Ltd., Beijing 101399 (CN)
(72) Inventor: FENG, Pan, Beijing 101399 (CN)
(74) Representative: Maiwald GmbH
(86) International application number: PCT/CN2022/081811
(87) International publication number: WO 2022/206442

(57) **Abstract**

The present application provides a protective assembly and a battery module. The protective assembly comprises: a protective member and protective covers; the protective member comprises: a protective member body and high-voltage insulating seats; the protective member body extends along a first direction; the protective member body has a first side surface and a second side surface facing away from each other along a second direction intersecting the first direction; the number of high-voltage seats is two, and the two high-voltage seats are respectively disposed at two ends of the first side surface of the protective member body; one of the high-voltage insulating seats is used for fixing a positive busbar, and the other high-voltage insulating seat is used for fixing a negative busbar; the number of the protective covers is two; the two protective covers respectively cover the two high-voltage insulating seats; the first side surface of the protective member body is provided with a first connecting portion connected to a cover plate of a battery module, and the second side surface is provided with a second connecting portion connected to an end plate of the battery module. One protective assembly can fix the positive busbar and the negative busbar simultaneously, thereby reducing the number of parts, thus improving the integration level.

## Description

### CROSS-REFERENCE TO RELATED APPLICATIONS

This application is based on and claims the priority of Chinese Patent Application No.202120672700.0 filed on April 1, 2021, the entire content of which is hereby incorporated herein by reference.

### FIELD

The application relates to the field of vehicle technology, in particular to a protective assembly and a battery module.

### BACKGROUND

Battery modules are the power source of electric vehicles. Generally, a battery module has a positive busbar, a negative busbar and two protective members. One protective member is arranged on the positive busbar for insulation protection of the positive busbar, and the other protective member is arranged on the negative busbar for insulation protection of the negative busbar.

However, a battery module needs to be equipped with two protective members, which leads to a large number of parts and low integration level of the battery module.

### SUMMARY

In view of this, the application provides a protective assembly and a battery module, which mainly solve the technical problems of reducing the number of parts of the battery module and improving the integration level of the battery module.

In order to achieve the above target, in a first aspect, embodiments of the present application provide a protective assembly, including a protective member and a protective cover. The protective member includes a protective member body and a high-voltage insulating seat. The protective member body extends along a first direction, and the protective member body has a first side face and a second side face opposite to each other along a second direction intersecting the first direction. The number of the high-voltage insulating seats is two, and the two high-voltage insulating seats are respectively arranged at two ends of the first side face of the protective member body; one of the high-voltage insulating seats is configured to fix a positive busbar, and the other is configured to fix the negative busbar. The number of the protective covers is two, and the two protective covers are respectively covered on the two high-voltage insulating seats. The first side face of the protective member body is provided with a first connecting part connected with a cover plate of a battery module, and the second side face is provided with a second connecting part connected with an end plate of the battery module.

In an embodiment of that present application, the high-voltage insulating seat is provided with a hole with an internal thread along the second direction, and two mutually opposite sides of the high-voltage insulating seat along the first direction are respectively provided with a first snapping part, and an inner side of the protective cover is provided with a second snapping part adapted to the first snapping part. The second direction is perpendicular to the first direction.

In an embodiment of that present application, the high-voltage insulating seat is provided with an embedded nut along the second direction to form the hole with the internal thread.

In an embodiment of that present application, the first snapping part is a strip-shaped protrusion, an extending direction of the strip-shaped protrusion is a third direction perpendicular to the first direction, and the second snapping part is a strip-shaped groove. Or, the first snapping part is a strip-shaped groove, an extending direction of the strip-shaped groove is a third direction perpendicular to the first direction, and the second snapping part is a strip-shaped protrusion.

In an embodiment of that present application, a surface of the high-voltage insulating seat facing away from the first side face of the protective member body is provided with a busbar limiting structure. The busbar limiting structure includes a first strip-shaped limiting protrusion and a second strip-shaped limiting protrusion, and the first strip-shaped limiting protrusion and the second strip-shaped limiting protrusion are perpendicular to the first direction. A spacing distance between the first strip-shaped limiting protrusion and the second strip-shaped limiting protrusion is equal to a width of the busbars.

In an embodiment of that present application, the protective assembly further includes: a limiting structure arranged on the second side face of the protective member body. The limiting structure includes a first limiting column and a second limiting column with different lengths. An end of the first limiting column and an end of the second limiting column are connected with the second side face of the protective member body, the first limiting column and the second limiting column are adjacent to each other, and a connecting line between the first limiting column and the second limiting column is perpendicular to the first direction.

In an embodiment of that present application, the second connecting part is a snapping foot extending from the second side face of the protective member body to a direction facing away from the second side face of the protective member body, and an end of the snapping foot facing away from the second side face of the protective member body is provided with a hooking part. A plurality of limiting structures is provided, and at least one second connecting part is arranged between two limiting structures.

In an embodiment of that present application, the first connecting part is a first protruding part extending from the first side face of the protective member body to a direction facing away from the first side face of the protective member body, the first protruding part is provided with a screw hole along the second direction, the first connecting part is arranged between the two high-voltage insulating seats, and the first protruding part is a hollow structure with an opening; and/or, the first side face of the protective member body is provided with a second protruding part extending in a direction facing away from the first side face of the protective member body, and a surface of second protruding part facing away from the protective member body is provided with a positioning column extending in a direction facing away from the second protruding part.

In a second aspect, based on the same inventive concept, embodiments of the present application provide a battery module. The battery module includes a protective assembly and a frame. The frame is provided with an accommodating space for accommodating a battery cell, and includes a first end plate, a first side plate, a second end plate, a second side plate and a bottom plate. The first end plate, the first side plate, the second end plate and the second side plate are sequentially connected end to end and are all connected at a same side of the bottom plate to define the accommodating space. A surface of the first end plate or the second end plate facing away from the bottom plate is provided with a third connecting part connected with the second connecting part of the protective assembly.

In an embodiment of that present application, the third connecting part is a groove formed by recessing the surface of the first end plate facing away from the bottom plate, and a shape of the groove is matched with the second connecting part and the limiting structure of the protective assembly.

Embodiments of the application provide a protective assembly and a battery module, one protective assembly can fix a positive busbar and a negative busbar at the same time, thereby reducing the number of parts of the battery module and improving the integration level of the battery module.

The above description is only the summary of the technical solution of this application. In order to understand the technical means of this application more clearly and implement it according to the contents of the specification, the following is a detailed description of the preferred embodiments of this application with the accompanying drawings.

### BRIEF DESCRIPTION OF THE DRAWINGS

FIG. 1 is a schematic diagram of a protective assembly according to an embodiment of the present application.
FIG. 2 is a (partial) schematic diagram of a protective assembly according to an embodiment of the present application.
FIG. 3 is a (top) schematic diagram of a protective assembly according to an embodiment of the present application.
FIG. 4 is a (partial) schematic diagram of a protective assembly according to an embodiment of the present application.
FIG. 5 is a (partial) schematic diagram of a protective assembly according to an embodiment of the present application.
FIG. 6 is a (partial) schematic diagram of a protective assembly according to an embodiment of the present application.
FIG. 7 is a (partial) schematic diagram of a protective assembly according to an embodiment of the present application.
FIG. 8 is a schematic diagram of a protective cover of a protective assembly according to an embodiment of the present application.
FIG. 9 is a (partially disassembled) schematic diagram of a battery module according to an embodiment of the present application.
FIG. 10 is a (partial) schematic diagram of a battery module according to an embodiment of the present application.
FIG. 11 is a schematic diagram of a battery module (when assembling a cover plate) according to an embodiment of the present application.
FIG. 12 is a schematic diagram of a battery module (after assembling a cover plate) according to an embodiment of the present application.

Description of reference numerals:
10- protective assembly, 110- protective member, 111 - protective member body, 1111- first side face, 1112- second side face, 112- high-voltage insulating seat, 1121- hole, 1122- first snapping part, 1123 - busbar limiting structure, 113 - first connecting part, 1131- screw hole, 114- second connecting part, 115 - limiting structure, 116- second protruding part, 1161- positioning column, 130- protective cover, 1301- second snapping part, 1302- aperture;
100- battery module, 102- negative busbar, 103- cover plate, 104- end plate, 105- third connecting part.

### DETAILED DESCRIPTION

In order to make the purpose, technical solution and advantages of embodiments of this application more clear, the technical solution in embodiments of this application will be described clearly and completely with the attached drawings. It is apparent that the described embodiments are part of embodiments of this application, but not all of embodiments. Based on embodiments in this application, all other embodiments obtained by ordinary technicians in this field without inventive work belong to the protection scope of this application. Therefore, the following detailed description of embodiments of the application provided in the accompanying drawings is not intended to limit the scope of the claimed application, but merely represents selected embodiments of the application.

Embodiments in this application and the features in embodiments can be combined with each other without conflict. The present application will be described in detail with reference to the attached drawings and embodiments.

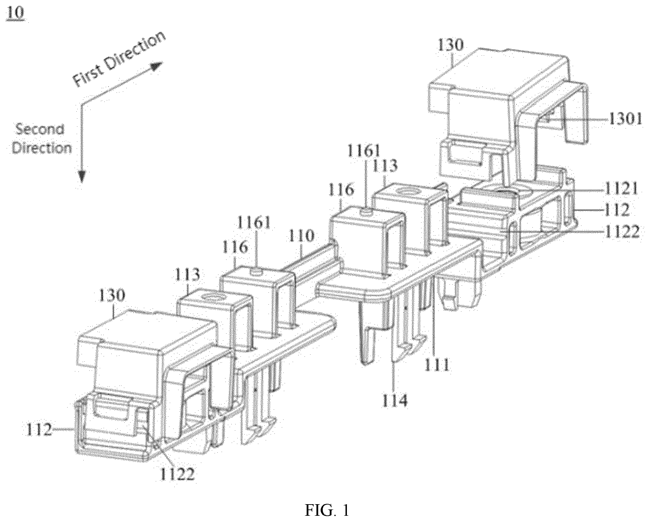

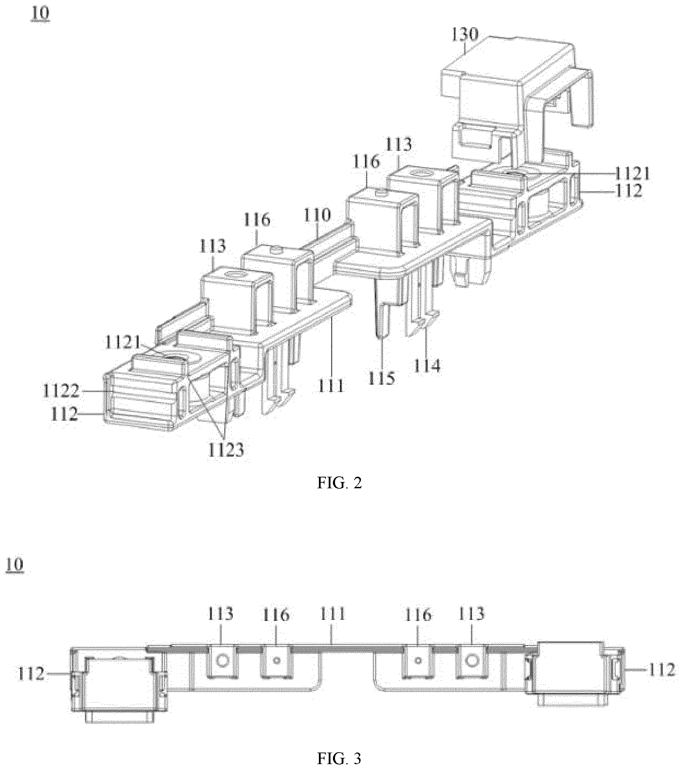

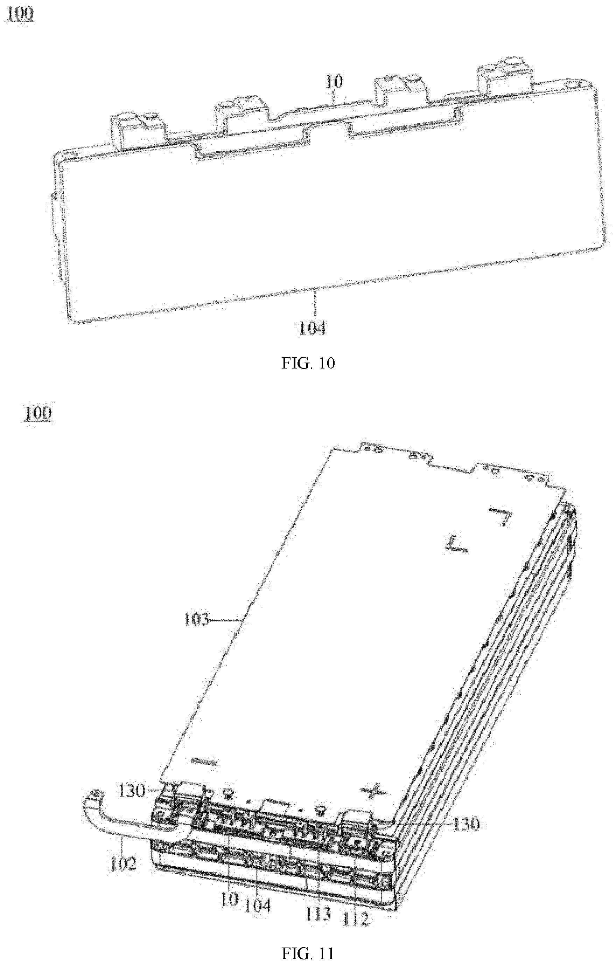

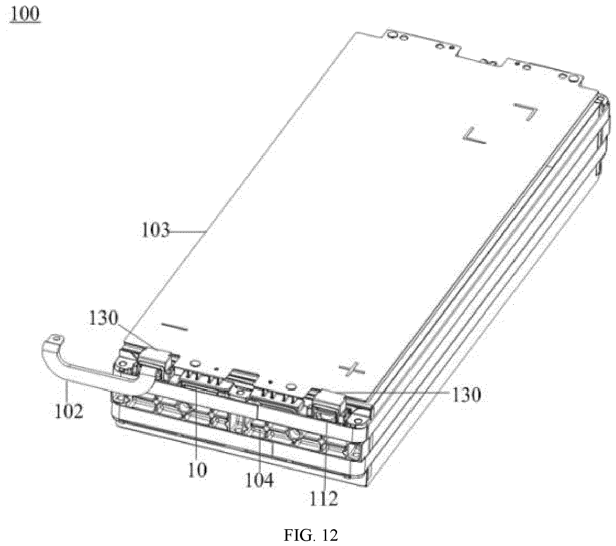

In a first aspect of the application, a protective assembly 10 is provided. As illustrated in FIGS. 1 to 12, the protective assembly 10 includes a protective member 110 and a protective cover 130. The protective member 110 includes a protective member body 111 and a high-voltage insulating seat 112. The protective member body 111 extends along a first direction, and the protective member body 111 has a first side face 1111 and a second side face 1112 opposite to each other along a second direction intersecting the first direction. The number of high-voltage insulating seats 112 is two, and the two high-voltage insulating seats 112 are respectively arranged at two ends of the first side face 1111 of the protective member body 111, one of the high-voltage insulating seats 112 is configured to fix a positive busbar, and the other high-voltage insulating seat 112 is configured to fix a negative busbar 102. The number of protective covers 130 is two, and the two protective covers 130 are respectively covered on the two high-voltage insulating seats 112. The first side face 1111 of the protective member body 111 is provided with a first connecting part 113 connected with a cover plate 103 of a battery module 100, and the second side face 1112 is provided with a second connecting part 114 connected with an end plate 104 of the battery module 100.

Specifically, the protective member body 111 can be a flat plate, or it can have two steps as illustrated in FIG. 1, with a weight-reducing gap between the two steps, and each of the two high-voltage insulating seats 112 is arranged on one step. The described protective member body 111 has the first side face 1111 and the second side face 1112 opposite to each other along the second direction intersecting the first direction. The "intersecting" herein means that the first direction and the second direction are not parallel. For example, the second direction is perpendicular to the first direction.

One of the high-voltage insulating seats 112 is configured to fix the positive busbar and the other of the high-voltage insulating seats 112 is configured to fix the negative busbar 102. The "fix" herein can be clip-on fixing, screw-on fixing or other fixing methods, which is not specifically limited here.

The above two protective covers 130 are respectively covered on the two high-voltage insulating seats 112, in other words, one protective cover 130 is covered on one high-voltage insulating seat 112, and the other protective cover 130 is covered on the other high-voltage insulating seat 112.

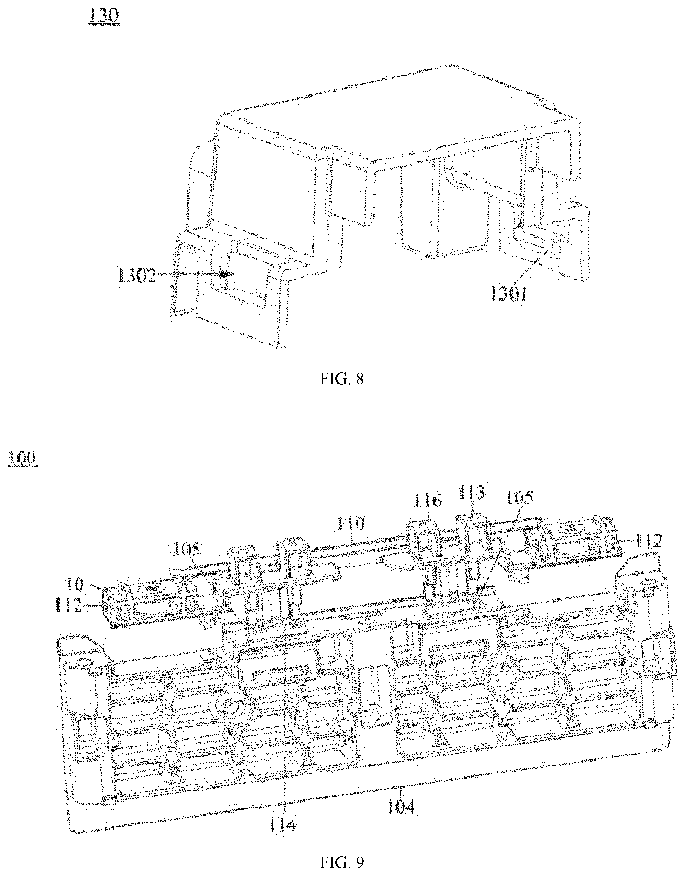

In a specific embodiment, as illustrated in FIGS. 9 to 12, when assembling the battery module 100, firstly, the protective assembly 10 is fixed to an upper end of the end plate 104 of the battery module 100 through the second connecting part 114 on a side of the second surface 1112 of the protective assembly 10. Then, the positive busbar and the negative busbar 102 are respectively fixed on the two high-voltage insulating seats 112, and the two protective covers 130 are respectively covered on the two high-voltage insulating seats 112. Finally, the cover plate 103 of the battery module 100 can be connected to the first connecting part 113 on a side of the first surface 1111 of the protective assembly 10.

In embodiments of the application, the positive busbar and the negative busbar can be fixed at the same time through one protective assembly, so that the number of parts of the battery module can be reduced and the integration level of the battery module can be improved.

In specific implementation, the protective cover 130 can be detachably covered on the high-voltage insulating seat 112. Here, the "detachable covering" can be a snap-fit covering of the protective cover 130 on the high-voltage insulating seat 112, a screw-on covering of the protective cover 130 on the high-voltage insulating seat 112, or other detachable covering connection methods.

In an embodiment of the application, as illustrated in FIGS. 1, 2, 4-6 and 9, the high-voltage insulating seat 112 is provided with a hole 1121 with an internal threads along the second direction, and two mutually opposite side faces of the high-voltage insulating seat 112 along the first direction are respectively provided with a first snapping part 1122, and an inner side of the protective cover 130 is provided with a second snapping part 1301 adapted to the first snapping part 1122. The second direction is perpendicular to the first direction.

Specifically, the above-mentioned high-voltage insulating seat 112 is provided with the hole 1121 with the internal thread along the second direction, so that the positive busbar can be fixed on one high-voltage insulating seat 112 of the protective assembly 10 by a stud with an external thread passing through the positive busbar and the hole 1121 in the one high-voltage insulating seat 112, and then the negative busbar 102 can be fixed on the other high-voltage insulating seat 112 of the protective assembly 10 by another stud with the external thread passing through the negative busbar 102 and the hole 1121 in the other insulating seat 112. The two mutually opposite side faces of the above-mentioned high-voltage insulating seat 112 are respectively provided with the first snapping part along the first direction, and the inner side of the protective cover 130 is provided with the second snapping part 1301 adapted to the first snapping part 1122, where one of the first snapping part 1122 and the second snapping part 1301 can be a protrusion, and the other can be a recessed part adapted to the protrusion. For example, the first snapping part 1122 is a strip-shaped protrusion, an extending direction of the strip-shaped protrusion is a third direction perpendicular to the first direction, and the second snapping part 1301 is a strip-shaped groove. Alternatively, the first snapping part 1122 is a strip-shaped groove as illustrated in FIGS. 1- 12, an extending direction of the strip-shaped groove is a third direction perpendicular to the first direction, and the second snapping part 1301 is a strip-shaped protrusion as illustrated in FIGS. 1- 12.

When the first snapping part 1122 is a strip-shaped protrusion, the extending direction of the strip-shaped protrusion is the third direction perpendicular to the first direction, and the second snapping part 1301 is a strip-shaped groove, the upper end of the first snapping part 1122 is an inclined face. In other words, a cross section of the first snapping part 1122 along the first direction is trapezoidal or triangular, so that the protective cover 130 can be slowly snap-fitted along the inclined face when it is covered on the high-voltage insulating seat 112, to prevent the first snapping part 1122 on the high-voltage insulating seat 112 from breaking. Similarly, when the first snapping part 1122 is a strip-shaped groove as illustrated in FIGS. 1- 12, the extending direction of the strip-shaped groove is the third direction perpendicular to the first direction, and the second snapping part 1301 is a strip-shaped protrusion as illustrated in FIGS. 1- 12, the lower end of the second snapping part 1301 is an inclined face as illustrated in FIG. 8. In other words, a cross section of the second snapping part 1301 along the first direction is trapezoidal or triangular, so that the protective cover 130 can be slowly snap-fitted along the inclined face when it is covered on the high-voltage insulating seat 112, to prevent the second snapping part 1301 on the protective cover 130 from breaking.

It should be noted that, in order to make snap-fitting of the protective cover 130 with the high-voltage insulating seat 112 more smooth, as illustrated in FIG. 8, two sides of the protective cover 130 along the first direction are each provided with an aperture 1302 to improve the elasticity of the two sides of the protective cover 130 along the first direction, so that the protective cover 130 is slightly deformed when it is snap-fitted with the high-voltage insulating seat 112, so that the protective cover can be snap-fitted with the high-voltage insulating seat more smoothly.

In a specific embodiment of the application, as illustrated in FIGS. 1 to 12, the high-voltage insulating seat 112 is provided with an embedded nut along the second direction to form the hole 1121 with the internal thread, and the connection structure between the embedded nut and the high-voltage insulating seat 112 is firmer, so that the structural strength of the protective assembly is better.

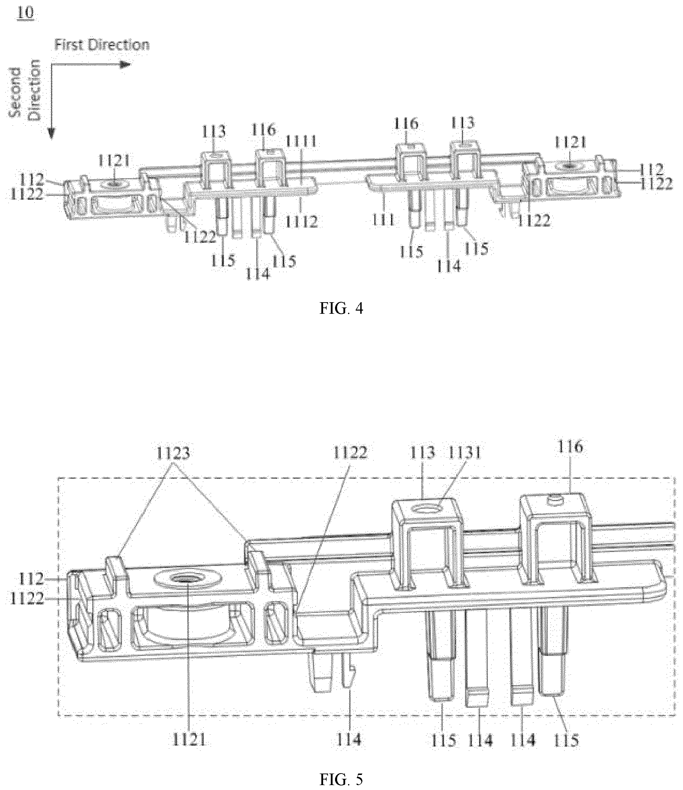

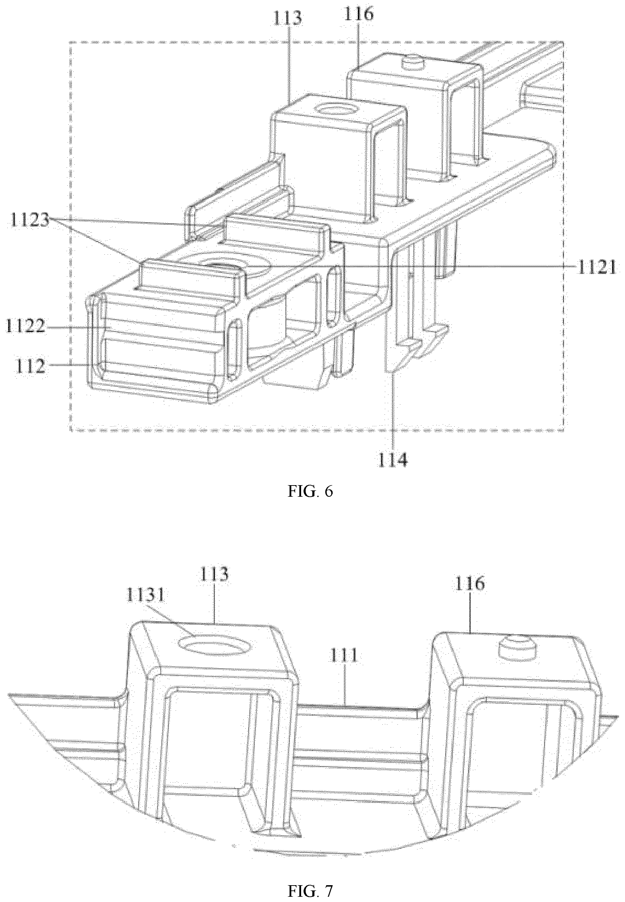

In an embodiment of the application, as illustrated in FIGS. 5 and 6, a surface of the high-voltage insulating seat 112 facing away from the first side face 1111 of the protective member body 111 is provided with a busbar limiting structure 1123. The busbar limiting structure 1123 includes a first strip-shaped limiting protrusion and a second strip-shaped limiting protrusion, and the first strip-shaped limiting protrusion and the second strip-shaped limiting protrusion are perpendicular to the first direction. A spacing distance between the first strip-shaped limiting protrusion and second strip-shaped limiting protrusion is equal to a width of the busbar, so that the positive/negative busbar 102 is limited by the first and second strip-shaped limiting protrusions when placed between the first and second strip-shaped limiting protrusions, to prevent the positive/negative busbar from displacement during assembly, thereby improving the assembly efficiency.

In an embodiment of the application, referring to FIGS. 4 and 5, the protective assembly 10 may further include a limiting structure 115, and the limiting structure 115 is arranged on the second side face 1112 of the protection body 111. The limiting structure 115 includes a first limiting column and a second limiting column with different lengths, and an end of the first limiting column and an end of the second limiting column are both connected with the second side face 1112 of the protection body 111, the first limiting column and the second limiting column are adjacent to each other, and the connecting line between the first limiting column and the second limiting column is perpendicular to the first direction. In this embodiment, when the positive busbar/negative busbar is screwed to the hole 1121 on the high-voltage insulating seat 112 through the stud with the external thread, it is necessary to rotate the stud, which will lead to the rotation of the protective member body, and the limiting structure can limit the rotation of the protective member body when the stud is rotated, thus improving the assembly efficiency.

In an embodiment of the present application, as illustrated in FIGS. 1, 2 and 4-6, the second connecting part 114 is a snapping foot extending from the second side face 1112 of the protective member body 111 to a direction facing away from the second side face 1112 of the protective member body 111, and an end of the snapping foot facing away from the second side face 1112 of the protective member body 111 is provided with a hooking part. There is a plurality of limiting structures 115, and at least one second connecting part 114 is arranged between two limiting structures 115. In this embodiment, the connection between the protective assembly and the end plate of the battery module is realized through the snapping foot with the hooking part, which is not only simple in structure, but also simple for manufacture.

In specific implementation, firstly, the extending direction of the snapping parts can be along the first direction, or along the second direction opposite to the first direction, or a direction perpendicular to the first direction but not the second direction. When a plurality of snapping foots is provided, the extending directions of the snapping parts on the plurality of snapping foots can be the same or different from each other. When the extending directions are different from each other, the protective assembly and the end plate of the battery module are more firmly connected, so it is preferable that the extending directions of the snapping parts on the plurality of snapping foots are different from each other. Secondly, there may be a plurality of second connecting parts 114, there also may be a plurality of limiting structures 115, and they are staggered with each other, to better prevent the rotation of the protective member body.

In an embodiment of the application, as illustrated in FIGS. 5 and 7, the first connecting part 113 is a first protruding part extending from the first side face 1111 of the protective member body 111 to a direction facing away from the first side face 1111 of the protective member body 111, and the first protruding part is provided with a screw hole 1131 along the second direction, the first connecting part 113 is arranged between two high-voltage insulating seats 112, and the first protruding part is a hollow structure with an opening. And/or, as illustrated in FIG. 1, the first side face 1111 of the protective member body 111 has a second protruding part 116 extending to a direction facing away from the first side face of the protective member body 111, and a surface of the second protruding part 116 facing away from the protective member body 111 has a positioning column 1161 extending to a direction facing away from the second protruding part 116.

Specifically, the above-described first connecting part 113 is the first protruding part extending from the first side face 1111 of the protective member body 111 to a direction facing away from the first side face 1111 of the protective member body 111, and the first protruding part is provided with the screw hole 1131 along the second direction. Here, the cover plate 103 of the battery module 100 is provided with a hole adapted to the screw hole 1131, so that the cover plate 103 and the first protruding part can be connected by a stud. The first side face 1111 of the above-mentioned protective member body 111 has the second protruding part 116 extending facing away from the first side face of the protective member body 111, and the surface of the second protruding part 116 facing away from the protective member body 111 has the positioning column 1161 extending to a direction facing away from the second protruding part. Here, the cover plate 103 of the battery module 100 is provided with a positioning hole corresponding to the positioning column 1161, so that when the first protruding part is connected with the cover plate 103, the screw hole 1131 of the first protruding part can be more quickly aligned with the corresponding hole on the cover plate 103 through the cooperation of the positioning column and the positioning hole.

In this embodiment, firstly, the connection between the cover plate and the protective assembly of the battery module can be realized by screwing the cover plate and the protective assembly of the battery module using the stud through the screw hole, and the hollow structure can reduce the manufacturing materials, reduce the weight of the protective assembly, and at the same time reduce the manufacturing cost of the protective assembly. Secondly, the positioning column can be used for pre-positioning in the process of connecting the protective assembly with the cover plate, so that the installation efficiency between the protective assembly and the cover plate can be improved.

In specific implementation, the protective assembly 10 can be provided with a hole, a notch, etc. to reduce the manufacturing materials of the protective assembly, reduce the weight of the protective assembly, and reduce the manufacturing cost of the protective assembly.

Based on the same inventive concept, the second aspect of the application provides a battery module 100. As illustrated in FIGS. 9 to 12, the battery module 100 includes a protective assembly 10 and a frame, and the frame is provided with an accommodating space for accommodating a battery cell. The frame includes a first end plate, a first side plate, a second end plate, a second side plate and a bottom plate, and the first end plate, the first side plate, the second end plate and the second side plate are sequentially connected end to end and connected at the same side of the bottom plate, to define the accommodating space. A surface of the first end plate facing away from the bottom plate is provided with a third connecting part 105 for connecting the second connecting part 114 of the protective assembly 10.

In this embodiment, the protective assembly of the first aspect is arranged in the battery module, so that the number of parts of the battery module can be reduced and the integration level of the battery module can be improved.

In a specific embodiment of the application, as illustrated in FIGS. 9 to 12, the third connecting part 105 is a groove formed by recessing the surface of the first end plate facing away from the bottom plate, and a shape of the groove is matched with the second connecting part 114 and the limiting structure 115 of the protective assembly 10. In other words, the second connecting part 114 and the limiting structure 115 are inserted into the groove, and the groove is provided with a hooking recess adapted to the hooking part, and the hooking part and the hooking recess are fitted to fix the protective assembly on the second end plate. In this embodiment, the groove is simple in structure and convenient to manufacture.

It should be noted that the protective assembly in the battery module provided by embodiments of this application is similar to the description of the protective assembly embodiments in the first aspect, and has similar beneficial effects as the protective assembly embodiments in the first aspect. For understanding the technical details not disclosed in the battery module embodiments of this application, please refer to the description of the protective assembly embodiments in this application, and will not repeat them here.

In the description of this application, it should be understood that the terms "first" and "second" are only used for descriptive purposes, and cannot be understood as indicating or implying relative importance or implicitly indicating the number of indicated technical features. Therefore, the features defined as "first" and "second" can explicitly or implicitly include at least one of these features.

In addition, in the description of this application, it should be understood that the terms "longitudinal", " transverse ", "up", "down", "front", "rear", "left", "right", "vertical", "horizontal", "top", "bottom", "inner", "outer", "axial" and "radial" are based on the azimuth or positional relationship illustrated in the attached drawings, only for the convenience of describing this application and simplifying the description, and do not indicate or imply that the devices or elements referred to must have a specific orientation, be constructed and operated in a specific orientation, so they cannot be understood as limitations of this application.

In addition, in this application, unless otherwise specified and limited, the terms "connected" and "coupled" should be broadly understood, such as mechanical connection or electrical connection. It can also be directly connected or indirectly connected through an intermediary, and it can be the internal communication between two elements or the interactive relationship between two elements. Unless otherwise specified, the specific meanings of the above terms in this application can be understood by ordinary people in the field according to specific circumstances.

Finally, it should be explained that the above embodiments are only used to illustrate the technical solution of the application, but not to limit it. Although the present application has been described in detail with reference to the foregoing embodiments, it should be understood by those skilled in the art that the technical solution described in the foregoing embodiments can still be modified, or some or all of its technical features can be replaced by equivalents. However, these modifications or substitutions do not make the essence of the corresponding technical solutions deviate from the scope of the technical solutions of various embodiments of this application.

## Claims

1. A protective assembly, comprising:
a protective member, comprising a protective member body and a high-voltage insulating seat, the protective member body extending along a first direction, the protective member body having a first side face and a second side face opposite to each other along a second direction intersecting with the first direction, the number of the high-voltage insulating seats being two, and the two high-voltage insulating seats being respectively arranged at two ends of the first side face of the protective member body, one of the high-voltage insulating seats being configured to fix a positive busbar, and the other being configured to fix the negative busbar; and
a protective cover, the number of the protective covers being two, the two protective covers being respectively covered on the two high-voltage insulating seats,
wherein the first side face of the protective member body is provided with a first connecting part connected with a cover plate of a battery module, and the second side face is provided with a second connecting part connected with an end plate of the battery module.

2. The protective assembly according to claim 1, wherein,
the high-voltage insulating seat is provided with a hole with an internal thread along the second direction, and two mutually opposite side faces of the high-voltage insulating seat along the first direction are respectively provided with a first snapping part;
an inner side of the protective cover is provided with a second snapping part adapted to the first snapping part;
wherein the second direction is perpendicular to the first direction.

3. The protective assembly according to claim 2, wherein,
the high-voltage insulating seat is provided with an embedded nut along the second direction to form the hole with the internal thread.

4. The protective assembly according to claim 2, wherein,
the first snapping part is a strip-shaped protrusion, and an extending direction of the strip-shaped protrusion is a third direction perpendicular to the first direction, and the second snapping part is a strip-shaped groove; or,
the first snapping part is a strip-shaped groove, an extending direction of the strip-shaped groove is a third direction perpendicular to the first direction, and the second snapping part is a strip-shaped protrusion.

5. The protective assembly according to any one of claims 1-4, wherein,
a surface of the high-voltage insulating seat facing away from the first side face of the protective member body is provided with a busbar limiting structure, the busbar limiting structure comprises a first strip-shaped limiting protrusion and a second strip-shaped limiting protrusion, and the first strip-shaped limiting protrusion and the second strip-shaped limiting protrusion are both perpendicular to the first direction; and
wherein a spacing distance between the first strip-shaped limiting protrusion and the second strip-shaped limiting protrusion is equal to a width of the busbars.

6. The protective assembly to any one of claims 1-4, further comprising:
a limiting structure arranged on the second side face of the protective member body, and comprising a first limiting column and a second limiting column with different lengths, wherein an end of the first limiting column and an end of the second limiting column are connected with the second side face of the protective member body, the first limiting column and the second limiting column are adjacent to each other, and a connecting line between the first limiting column and the second limiting column is perpendicular to the first direction.

7. The protective assembly according to claim 6, wherein,
the second connecting part is a snapping foot extending from the second side face of the protective member body to a direction facing away from the second side face of the protective member body, and an end of the snapping foot far away from the second side face of the protective member body is provided with a hooking part; and
wherein a plurality of limiting structures is provided, and at least one second connecting part is arranged between two limiting structures.

8. The protective assembly according to claim 1, wherein,
the first connecting part is a first protruding part extending from the first side face of the protective member body to a direction facing away from the first side face of the protective member body, the first protruding part is provided with a screw hole along the second direction, the first connecting part is arranged between the two high-voltage insulating seats, and the first protruding part is a hollow structure with an opening; and/or,
the first side face of the protective member body is provided with a second protruding part extending in a direction facing away from the first side face of the protective member body, and a surface of the second protruding direction is provided with a positioning column extending in a direction facing away from the second protruding part.

9. A battery module, comprising:
a protective assembly according to any one of claims 1 to 8; and,
a frame provided with an accommodating space for accommodating a battery cell, and comprising a first end plate, a first side plate, a second end plate, a second side plate and a bottom plate, wherein the first end plate, the first side plate, the second end plate and the second side plate are sequentially connected end to end and are all connected at a same side of the bottom plate to define the accommodating space,
wherein a surface of the first end plate or the second end plate facing away from the bottom plate is provided with a third connecting part connected with the second connecting part of the protective assembly.

10. The battery module according to claim 9, wherein,
the third connecting part is a groove formed by recessing the surface of the first end plate facing away from the bottom plate, and a shape of the groove is matched with the second connecting part and a limiting structure of the protective assembly.
